# FASCICULE DE BREVET EUROPEEN

(11) **EP 3 574 809 B1**
(45) Date de publication et mention de la délivrance du brevet: **29.06.2022**
(21) Numéro de dépôt: 19173568.7
(22) Date de dépôt: 09.05.2019
(51) Int. Cl.: A47J 31/44, A47J 31/46

(54) **MACHINE DE PRÉPARATION DE BOISSONS MUNIE D'UN DISPOSITIF ROTATIF D'AGITATION ET D'UNE BUSE CAFÉ**
GETRÄNKEZUBEREITUNGSMASCHINE MIT EINER ROTIERENDEN RÜHRVORRICHTUNG UND EINER KAFFEEDÜSE
BEVERAGE PREPARATION MACHINE PROVIDED WITH A ROTARY STIRRING DEVICE AND A COFFEE SPOUT

(30) Priorité: 31.05.2018 FR 1854732
(43) Date de publication de la demande: 04.12.2019
(73) Titulaire: SEB S.A., 69130 Ecully (FR)
(72) Inventeur: BEAUDET, Olivier, 61140 RIVES D'ANDAINE (FR); MORIN, Gilles, 69290 POLLIONNAY (FR)
(74) Mandataire: SEB Développement

(56) Documents cités:
- EP-A1- 1 833 339
- EP-B1- 2 257 207
- WO-A1-2013/008177
- FR-A1- 3 056 896

## Description

La présente invention se rapporte au domaine technique général des machines de préparation de boissons, notamment des machines à café automatiques pour réaliser des préparations à base de lait et/ou de café.

Il est connu du document EP2268174 une machine de préparation de boissons comportant un bâti muni d'un support de tasse, au moins une buse de distribution de café comprenant un orifice de sortie et un dispositif rotatif d'agitation comprenant un outil rotatif autour d'un axe A. L'outil rotatif est destiné à coopérer avec une préparation contenue dans un récipient reposant sur le support de tasse. Le dispositif rotatif d'agitation comporte un conduit d'acheminement d'eau chaude et/ou de vapeur vers l'outil rotatif.

La machine de préparation de boissons comporte une zone «café» et une zone «lait» dans laquelle est agencé le dispositif rotatif d'agitation. La buse de distribution de café est mobile entre une position café dans laquelle le café est distribué dans un récipient reposant dans la zone «café» et une position lait dans laquelle le café est distribué dans un récipient reposant dans la zone «lait» pour réaliser une préparation à base de lait et de café, notamment un cappuccino.

Ainsi, en fonction du type de préparation souhaitée, l'utilisateur doit manœuvrer la buse de distribution de café avant de lancer la réalisation de la préparation.

De plus, une machine de préparation de boissons qui comporte des zones «café» et «lait» séparées est relativement encombrante.

Dans cette machine de préparation de boissons, le dispositif rotatif d'agitation est fixe et l'utilisateur doit incliner le récipient afin de le passer sous l'outil rotatif pour le mettre en place ou le retirer de la zone «lait».

Le document FR-A-3056896 décrit une machine de préparation de boissons selon le préambule de la revendication indépendante 1.

Le but de la présente invention est de remédier aux inconvénients précités et de proposer une machine de préparation de boissons qui présente une mise en œuvre simple et ergonomique, notamment pour réaliser une préparation à base de lait et de café.

Un autre but de la présente invention est de proposer une machine de préparation de boissons qui présente une construction compacte, simple et qui soit économique à mettre en œuvre.

Ces buts sont atteints avec une machine de préparation de boissons selon la revendication indépendante 1.

Par la distance D est constante, on comprend que la distance D est mesurée dans un plan perpendiculaire à l'axe A qui passe par l'orifice de sortie.

Ainsi, la machine de préparation de boissons comporte une même zone de dépose du récipient pour réaliser une préparation à base de café, une préparation à base de lait ou une préparation à base de lait et de café. En conséquence, la machine de préparation de boissons peut présenter une construction compacte.

De plus, la distance entre l'orifice de sortie de la buse de distribution de café et l'outil rotatif est suffisamment réduite pour être adaptée à une ouverture supérieure de la majorité des récipients utilisés pour réaliser une préparation à base de lait et de café.

De manière avantageuse, la distance D est inférieure à 2 cm.

Par l'orifice de sortie est dissocié du dispositif rotatif d'agitation, on comprend que le dispositif rotatif d'agitation peut être déplacé seul, sans déplacer l'orifice de sortie.

De préférence, l'orifice de sortie de la buse de distribution de café est agencé de manière fixe par rapport au bâti.

Ainsi, la machine de préparation de boissons présente une construction simple.

De manière avantageuse, l'orifice de sortie et l'outil rotatif sont sensiblement dans un même plan horizontal P1 lorsque le dispositif rotatif d'agitation est en position haute d'attente.

Par l'orifice de sortie et l'outil rotatif sont sensiblement dans un même plan horizontal P1, on comprend qu'une distance entre l'orifice de sortie et l'outil rotatif mesurée selon une direction verticale est inférieure à 10 millimètres.

Ainsi, l'utilisateur place facilement le récipient pour réaliser la préparation à base de lait et de café sous le dispositif rotatif d'agitation en position haute d'attente et sous l'orifice de sortie. Il manipule uniquement le dispositif rotatif d'agitation pour positionner l'outil rotatif dans le récipient si nécessaire.

De préférence, le plan horizontal P1 et un plan horizontal P2 passant par une face supérieure du support de tasse sont distants d'une hauteur H, la hauteur H étant supérieure à 10 cm, de préférence supérieure à 15 cm.

Ainsi, la machine de préparation de boissons peut accepter des récipients de grande capacité.

De manière avantageuse, la course du dispositif rotatif d'agitation entre la position haute d'attente et la position basse de travail est sensiblement égale à la hauteur H.

Avantageusement le support de tasse est réglable en hauteur par rapport au bâti entre une position basse de réception de récipients de grande taille et une position haute de réception de récipients de petites tailles.

Ainsi, l'ouverture supérieure du récipient peut être positionnée au plus près de l'orifice de sortie de la buse de distribution de café pour éviter les éclaboussures.

De préférence, la buse de distribution de café est mobile en translation verticale parallèle à l'axe A entre une position relevée dans laquelle l'orifice de sortie est destiné à coopérer avec un récipient de grande taille et une position abaissée dans laquelle l'orifice de sortie (33) est destiné à coopérer avec un récipient de petite taille.

Ainsi, l'orifice de sortie de la buse de distribution de café peut être positionné au plus près de l'ouverture supérieure du récipient pour éviter les éclaboussures.

De préférence, la machine de distribution de boissons comporte un circuit de commande muni d'un organe de commande conçu pour lancer une préparation à base de lait et de café à partir d'une seule action, notamment un seul appui.

Ainsi, l'utilisateur peut réaliser une préparation à base de lait et de café par une manipulation de la tête de distribution et un appui sur l'organe de commande.

De manière avantageuse, le dispositif rotatif d'agitation comporte un moteur électrique destiné à entrainer l'outil rotatif.

Ainsi, le moteur électrique est agencé sur la tête de distribution, au plus près de l'outil rotatif. De plus, la vitesse de rotation de l'outil rotatif peut être adaptée, notamment en fonction du type de préparation.

De préférence, le conduit d'acheminement d'eau chaude et/ou de vapeur comporte une partie tubulaire qui s'étend le long de l'axe A entre une première extrémité sur laquelle est agencé l'outil rotatif et une seconde extrémité agencée sur un arbre d'entrainement.

Ainsi, la partie tubulaire assure deux fonctions, acheminer l'eau chaude et/ou la vapeur vers l'outil rotatif et entrainer l'outil rotatif.

De manière avantageuse, la partie tubulaire présente une longueur égale à la course du dispositif rotatif d'agitation entre la position haute d'attente et la position basse de travail.

De préférence, la partie tubulaire est agencée de manière amovible sur l'arbre d'entrainement.

Par agencée de manière amovible, on comprend que la partie tubulaire est démontable de l'arbre d'entrainement sans outil.

Une telle disposition permet de nettoyer facilement l'outil rotatif après une préparation de boisson. De plus, une fois l'outil rotatif retiré, la tête de distribution peut être positionnée au-dessus d'un récipient pour distribuer de l'eau chaude par la partie creuse de l'arbre d'entrainement, le moteur n'étant pas mis en marche.

De manière avantageuse, l'arbre d'entrainement comporte une partie creuse d'acheminement d'eau chaude et/ou de vapeur sur laquelle est agencée la partie tubulaire et la partie creuse comporte un orifice de sortie d'eau chaude et/ou de vapeur.

Dans le cas où l'orifice de sortie de la buse de distribution de café est fixe par rapport au bâti, l'orifice de sortie d'eau chaude et/ou de vapeur et l'orifice de sortie de café sont sensiblement dans un même plan horizontal P1 lorsque le dispositif rotatif d'agitation est en position basse de travail avec la partie tubulaire retirée.

Ainsi, l'arbre d'entrainement achemine l'eau chaude et/ou la vapeur soit vers l'outil rotatif si la partie tubulaire est en place ou soit directement dans le récipient si la partie tubulaire est retirée.

De préférence, le dispositif rotatif d'agitation comporte une boite à vapeur, ladite boîte à vapeur comportant une chambre, un canal radial d'entrée vapeur et deux paliers étanches de guidage de l'arbre d'entrainement de l'outil rotatif ; et la partie creuse d'acheminement d'eau chaude et/ou de vapeur relie la chambre à la partie tubulaire.

De préférence, l'outil rotatif est mobile par rapport à l'orifice de sortie dans un plan horizontal.

Ainsi, l'outil rotatif peut être positionné sensiblement au centre du récipient ou, pour certaines recettes, volontairement désaxé par l'utilisateur.

Selon l'invention, le bâti comporte une face avant et la buse de distribution de café et l'outil rotatif sont agencés devant la face avant.

Ainsi, l'outil rotatif ainsi que le dispositif d'agitation sont facilement accessibles par l'utilisateur, notamment pour les déplacer verticalement. Dans le cas où la buse de distribution est mobile, elle est également facilement accessible par l'utilisateur pour la déplacer.

De préférence, la buse de distribution de café et l'outil rotatif sont agencés côte à côte dans un plan vertical parallèle à la face avant du bâti.

De manière avantageuse, la buse de distribution de café et l'outil rotatif sont agencés de part et d'autre d'un plan vertical perpendiculaire au plan vertical parallèle à la face avant du bâti.

L'invention sera mieux comprise à l'étude du mode de réalisation pris à titre nullement limitatif et illustré dans les figures annexées dans lesquelles :
- La figure 1 illustre une vue en perspective d'une machine de préparation de boissons selon un mode particulier de réalisation de l'invention.
- La figure 2 illustre une vue en perspective du dispositif rotatif d'agitation de la machine de préparation de boissons illustrée sur la figure 1.
- La figure 3 illustre une vue en coupe selon la ligne III-III du dispositif rotatif d'agitation de la machine de préparation de boissons illustrée sur la figure 2.
- La figure 4 illustre une vue en coupe partielle selon la ligne IV-IV du dispositif rotatif d'agitation et de la buse de distribution de café de la machine de préparation de boissons illustrée sur la figure 1.

On notera que, dans ce document, les termes «horizontal», «vertical», «inférieur», «supérieur», «longitudinal», «transversal», «haut», «bas», employés pour décrire la machine de distribution de boissons font référence à cette machine reposant sur un plan de travail, en situation d'usage.

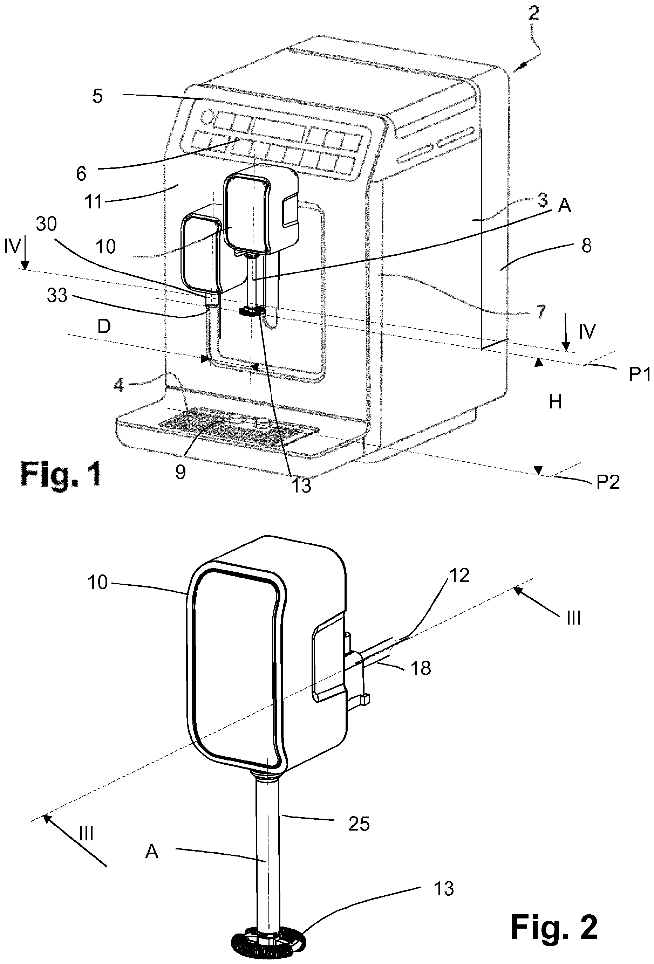

Dans l'exemple de réalisation représenté aux figures 1 à 4, une machine de préparation de boissons 2 comporte un bâti 3, un support de tasse 4 sur lequel un récipient peut être disposé. Le support de tasse 4 peut par exemple comporter une grille de support et un bac récolte-gouttes. Le support de tasse comporte une face supérieure 9 s'étendant dans un plan horizontal P2. La machine de préparation de boissons 2 comporte une buse 30 de distribution de café qui est agencée de manière solidaire avec le bâti 3 et un dispositif rotatif d'agitation 10 réglable en hauteur. Le dispositif rotatif d'agitation 10 est monté coulissant selon une translation verticale sur une plaque support 7 attenante au bâti 3.

Le dispositif rotatif d'agitation 10 comprend un outil rotatif 13 autour d'un axe A et destiné à coopérer avec une préparation contenue dans le récipient. Le dispositif rotatif d'agitation 10 comporte un conduit 12 d'acheminement d'eau chaude et/ou de vapeur vers l'outil rotatif 13. La buse 30 de distribution de café comprend un orifice de sortie 33 du café. La buse 30 de distribution de café et l'outil rotatif 13 sont agencés côte à côte dans un plan vertical parallèle à une face avant 11 du bâti 3. La buse 30 de distribution de café fait partie d'un circuit de distribution du café produit dans un dispositif d'infusion (non représentés sur les figures). La machine de préparation de boissons 2 comporte un réservoir 8 formant une alimentation en eau froide, le dispositif d'infusion étant alimenté en eau chaude par une chaudière (non représentée sur les figures). Le dispositif d'infusion peut comporter une chambre destinée à recevoir de la mouture provenant d'un broyeur à café intégré au distributeur ou une capsule de café. Dans le cas où la chambre est destinée à recevoir une capsule, la construction de la machine peut être très compacte.

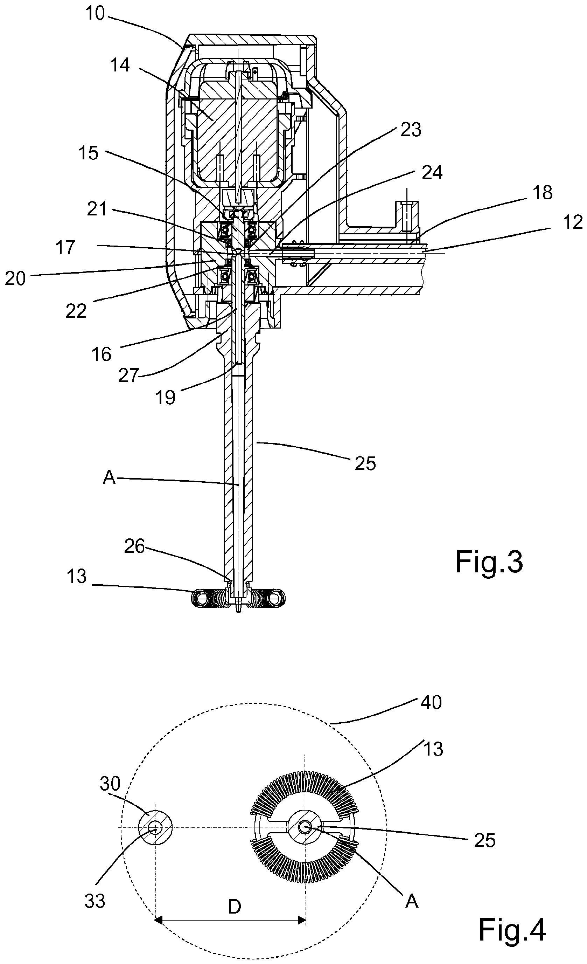

Le dispositif rotatif d'agitation 10 est mobile en translation verticale entre une position haute d'attente dans laquelle l'outil rotatif 13 est situé au-dessus du récipient et une position basse de travail dans laquelle l'outil rotatif 13 est situé dans le récipient. Tel que visible aux figures 1 et 4, l'axe A de rotation de l'outil rotatif 13 et l'orifice de sortie sont distants d'une distance D. La distance D est inférieure à 6 cm, de préférence inférieure à 4 cm de manière à ce que l'orifice de sortie 33 de la buse 30 de distribution de café et l'outil rotatif 13 soient agencés à l'aplomb d'une ouverture supérieure 40 (Fig.4) du récipient agencé sur le support de tasse 4. La distance D peut être suffisamment réduite pour que l'outil rotatif 13 soit agencé au centre du récipient, l'orifice de sortie 33 étant agencé au-dessus et à la périphérie de l'ouverture supérieure 40. Dans un mode particulier de réalisation, la distance D est inférieure à 2 cm.

L'orifice de sortie 33 et l'outil rotatif 13 sont compris dans un même plan horizontal P1 lorsque le dispositif rotatif d'agitation 10 est en position haute d'attente. Le plan horizontal P1 et le plan horizontal P2 passant par la face supérieure 9 du support de tasse 4 sont distants d'une hauteur H égale à 11 cm. La course du dispositif rotatif d'agitation 10 entre la position haute d'attente et la position basse de travail est sensiblement égale à la hauteur H pour que l'outil rotatif 13 puisse être positionné au plus près d'un fond du récipient.

Le support de tasse 4 est réglable en hauteur par exemple par un système motorisé ou par un système mécanique dans lequel le support de tasse comprend des lames latérales qui coopèrent avec des ouvertures agencées dans le bâti (non représentés sur les figures).

Dans une variante de réalisation, le support de tasse 4 est fixe par rapport au bâti et la buse 30 de distribution de café est mobile en translation verticale parallèle à l'axe A entre une position relevée dans laquelle l'orifice de sortie 33 est destiné à coopérer avec un récipient de grande taille et une position abaissée dans laquelle l'orifice de sortie (33) est destiné à coopérer avec un récipient de petite taille.

Tel que visible sur la figure 3, le dispositif rotatif d'agitation 10 comporte un moteur 14 électrique, un arbre d'entrainement 15, une boite à vapeur 20 et l'outil rotatif 13. L'outil rotatif 13 est agencé à une première extrémité 26 d'une partie tubulaire 25. La partie tubulaire 25 s'étend le long de l'axe A et comporte une deuxième extrémité 27 agencée sur l'arbre d'entrainement 15.

La boîte à vapeur 20 est traversée par l'arbre d'entrainement 15 et comporte deux paliers 21, 22 étanches de guidage de l'arbre d'entrainement 15. La boite à vapeur 20 comporte entre les deux paliers 21, 22 une chambre 23 alimentée en eau chaude et/ou en vapeur par un canal radial 24. L'arbre d'entrainement 15 présente une partie creuse 16 sur laquelle est agencée la deuxième extrémité 27 de la partie tubulaire 25. La partie creuse 16 comporte des ouvertures traversantes 17 qui permettent de faire communiquer l'intérieur de la partie creuse 16 avec la chambre 23. Ainsi le conduit 12 d'acheminement d'eau chaude et/ou de vapeur du dispositif rotatif d'agitation 10 comporte le canal radial 24, la chambre 23, les ouvertures traversantes 17, la partie creuse 16 et la partie tubulaire 25. Le conduit 12 d'acheminement d'eau chaude et/ou de vapeur comporte également un conduit souple 18 pour permettre la mobilité du dispositif rotatif d'agitation 10 par rapport au support de tasse 4.

La partie tubulaire 25 et l'outil rotatif 13 forment un ensemble qui est amovible du dispositif rotatif d'agitation 10. La partie tubulaire 25 est montée coulissante sur la partie creuse 16 de l'arbre d'entrainement 15 avec un léger serrage pour assurer l'entrainement en rotation. D'autres types d'assemblages démontables, notamment par baïonnettes sont possibles.

La partie creuse 16 comporte un orifice de sortie 19 d'eau chaude et/ou de vapeur. Pour distribuer de l'eau chaude et/ou de la vapeur, la partie tubulaire 25 et l'outil rotatif 13 peuvent être retirés et le dispositif rotatif d'agitation 10 peut être placé en position basse, au-dessus d'un récipient disposé sur le support de tasse 4. En position basse, l'orifice de sortie 19 d'eau chaude et/ou de vapeur et l'orifice de sortie 33 de café sont sensiblement dans un même plan horizontal P1.

Par l'orifice de sortie 19 d'eau chaude et/ou de vapeur et l'orifice de sortie 33 sont sensiblement dans un même plan horizontal P1, on comprend qu'une distance entre l'orifice de sortie 19 de la partie creuse 16 et l'orifice de sortie 33 de la buse 30 de distribution de café mesurée selon une direction verticale est inférieure à 10 millimètres.

La machine de préparation de boissons 2 comporte un circuit contrôle 5 (Fig.1) pour la commande et la gestion des cycles de préparation des boissons. Le circuit de contrôle 5 comporte plusieurs organes de commande 6 conçus pour, chacun, lancer une préparation à base de lait et de café à partir d'un seul appui, par exemple un cappuccino ou un café latté.

En fonctionnement, lorsque l'utilisateur veut réaliser une préparation à base de lait et de café, notamment un cappuccino, il verse du lait dans un récipient et le positionne sur le support de tasse 4 pour que l'ouverture supérieure 40 soit sous la buse 30 de distribution de café et sous le dispositif rotatif d'agitation 10 qui est en position haute d'attente. L'utilisateur déplace ensuite le dispositif rotatif d'agitation 10 dans la position basse de travail pour amener l'outil rotatif 13 dans le lait. L'utilisateur appuie alors sur l'organe de commande 6 pour lancer le cycle de préparation du cappuccino. Le circuit de contrôle 5 commande le démarrage du moteur 14 pour faire tourner l'outil rotatif 13 et commande la chaudière pour produire de la vapeur qui va arriver dans le lait par le conduit 12 d'acheminement. Ainsi, le lait va être chauffé et moussé. Après un temps prédéterminé, le circuit de contrôle 5 stoppe le moteur 14 et l'arrivée de vapeur puis commande la réalisation d'un café qui va s'écouler dans le récipient par l'orifice de sortie 33 de la buse 30 de distribution de café. Une fois la préparation terminée, l'utilisateur remonte le dispositif rotatif d'agitation 10 et peut désaccoupler l'outil rotatif 13 et la partie tubulaire 25 pour les nettoyer, par exemple en les plaçant dans un lave-vaisselle.

Bien entendu, l'invention n'est nullement limitée aux modes de réalisation décrits et illustrés qui n'ont été donnés qu'à titre d'exemples. Des modifications restent possibles, notamment du point de vue de la constitution des divers éléments ou par substitution d'équivalents techniques, sans sortir pour autant du domaine de protection de l'invention, qui est détérminé par les revendications.

Dans une variante de réalisation, la buse 30 de distribution de café et l'outil rotatif 13 sont agencés côte à côte dans un plan vertical perpendiculaire à la face avant 11 du bâti 3, notamment, la buse 30 est agencée entre l'outil rotatif 13 et la face avant 11.

## Revendications

1. Machine de préparation de boissons (2) comportant un bâti (3) muni d'un support de tasse (4), une buse (30) de distribution de café comprenant un orifice de sortie (33) et un dispositif rotatif d'agitation (10) comprenant un outil rotatif (13) autour d'un axe A et destiné à coopérer avec une préparation contenue dans un récipient reposant sur le support de tasse (4), ledit dispositif rotatif d'agitation (10) comportant un conduit (12) d'acheminement d'eau chaude et/ou de vapeur vers l'outil rotatif (13), le dispositif rotatif d'agitation (10) étant mobile en translation verticale parallèle à l'axe A entre une position haute d'attente dans laquelle l'outil rotatif (13) est situé au-dessus du récipient et une position basse de travail dans laquelle l'outil rotatif (13) est situé dans le récipient, l'orifice de sortie (33) étant dissocié du dispositif rotatif d'agitation (10) et agencé à une distance D de l'axe A de rotation de l'outil rotatif (13), **caractérisé en ce que** la distance D est constante et inférieure à 6 cm, de préférence inférieure à 4 cm de manière à ce que l'orifice de sortie (33) de la buse (30) de distribution de café et l'outil rotatif (13) soient agencés au-dessus d'une ouverture supérieure (40) du récipient agencé sur le support de tasse (4), **en ce que** le bâti (3) comporte une face avant (11) et **en ce que** la buse (30) de distribution de café et l'outil rotatif (13) sont agencés devant la face avant (11).

2. Machine de préparation de boissons (2) selon la revendication 1, **caractérisée en ce que** l'orifice de sortie de la buse (30) de distribution de café est agencé de manière fixe par rapport au bâti (3).

3. Machine de préparation de boissons (2) selon la revendication 2, **caractérisée en ce que** l'orifice de sortie (33) et l'outil rotatif (13) sont sensiblement dans un même plan horizontal P1 lorsque le dispositif rotatif d'agitation (10) est en position haute d'attente.

4. Machine de préparation de boissons (2) selon la revendication 3, **caractérisée en ce que** le plan horizontal P1 et un plan horizontal P2 passant par une face supérieure (9) du support de tasse (4) sont distants d'une hauteur H, la hauteur H étant supérieure à 10 cm, de préférence supérieure à 15 cm.

5. Machine de préparation de boissons (2) selon l'une quelconque des revendications précédentes, **caractérisée en ce que** le support tasse (4) est réglable en hauteur par rapport au bâti (3) entre une position basse de réception de récipients de grande taille et une position haute de réception de récipients de petites tailles.

6. Machine de préparation de boissons (2) selon la revendication 1, **caractérisée en ce que** la buse (30) de distribution de café est mobile en translation verticale parallèle à l'axe A entre une position relevée dans laquelle l'orifice de sortie (33) est destiné à coopérer avec un récipient de grande taille et une position abaissée dans laquelle l'orifice de sortie (33) est destiné à coopérer avec un récipient de petite taille.

7. Machine de préparation de boissons (2) selon l'une quelconque des revendications précédentes, **caractérisée en ce qu'**elle comporte un circuit de commande (5) muni d'un organe de commande (6) conçu pour lancer une préparation à base de lait et de café à partir d'une seule action, notamment un seul appui.

8. Machine de préparation de boissons (2) selon l'une quelconque des revendications précédentes, **caractérisée en ce que** le dispositif rotatif d'agitation (10) comporte un moteur (14) électrique destiné à entrainer l'outil rotatif (13).

9. Machine de préparation de boissons (2) selon l'une quelconque des revendications précédentes, **caractérisée en ce que** le conduit (12) d'acheminement d'eau chaude et/ou de vapeur comporte une partie tubulaire (25) qui s'étend le long de l'axe A entre une première extrémité (26) sur laquelle est agencé l'outil rotatif (13) et une seconde extrémité (27) agencée sur un arbre d'entrainement (15).

10. Machine de préparation de boissons (2) selon la revendication 9, **caractérisée en ce que** la partie tubulaire (25) est agencée de manière amovible sur l'arbre d'entrainement (15).

11. Machine de préparation de boissons (2) selon la revendication 10, **caractérisée en ce que** l'arbre d'entrainement (15) comporte une partie creuse (16) d'acheminement d'eau chaude et/ou de vapeur sur laquelle est agencée la partie tubulaire (25) et **en ce que** la partie creuse (16) comporte un orifice de sortie (19) d'eau chaude et/ou de vapeur.

12. Machine de préparation de boissons (2) selon la revendication 11, **caractérisée en ce que** le dispositif rotatif d'agitation (10) comporte une boite à vapeur (20), ladite boîte à vapeur (20) comportant une chambre (23), un canal radial (24) d'entrée vapeur et deux paliers (21, 22) étanches de guidage de l'arbre d'entrainement (15) de l'outil rotatif (13), et **en ce que** la partie creuse (16) d'acheminement d'eau chaude et/ou de vapeur relie la chambre (23) à la partie tubulaire (25).

13. Machine de préparation de boissons (2) selon l'une quelconque des revendications précédentes, **caractérisée en ce que** la buse (30) de distribution de café et l'outil rotatif (13) sont agencés côte à côte dans un plan vertical parallèle à la face avant (11) du bâti (3).

## Patentansprüche

1. Getränkezubereitungsmaschine (2), umfassend eine Rahmenfügung (3), die mit einer Tassenauflage (4) ausgerüstet ist, eine Düse (30) zum Ausschenken von Kaffee, umfassend eine Ausgangsöffnung (33) und eine rotierende Rührvorrichtung (10), die ein Rotationswerkzeug (13) um eine Achse A umfasst und dazu vorgesehen ist, mit einer Zubereitung zusammenzuwirken, die in einem auf der Tassenauflage (4) ruhenden Behälter enthalten ist, wobei die rotierende Rührvorrichtung (10) eine Leitung (12) zum Zuführen von heißem Wasser und/oder Dampf zum Rotationswerkzeug (13) umfasst, wobei die rotierende Rührvorrichtung (10) parallel zur Achse A zwischen einer hohen Warteposition, in der sich das Rotationswerkzeug (13) über dem Behälter befindet, und einer niedrigen Arbeitsposition, in der sich das Rotationswerkzeug (13) im Behälter befindet, vertikal verschiebbar ist, wobei die Ausgangsöffnung (33) von der rotierenden Rührvorrichtung (10) getrennt ist und in einem Abstand D von der Rotationsachse A des Rotationswerkzeugs (13) angeordnet ist, **dadurch gekennzeichnet, dass** der Abstand D konstant und unter 6 cm ist, vorzugsweise unter 4 cm, sodass die Ausgangsöffnung (33) der Düse (30) zum Ausschenken von Kaffee und das Rotationswerkzeug (13) über einer oberen Öffnung (40) des auf der Tassenauflage (4) angeordneten Behälters angeordnet sind, dass die Rahmenfügung (3) eine Vorderseite (11) umfasst und dass die Düse (30) zum Ausschenken von Kaffee und das Rotationswerkzeug (13) vor der Vorderseite (11) angeordnet sind.

2. Getränkezubereitungsmaschine (2) nach Anspruch 1, **dadurch gekennzeichnet, dass** die Ausgangsöffnung der Düse (30) zum Ausschenken von Kaffee in Bezug auf die Rahmenfügung (3) festsitzend angeordnet ist.

3. Getränkezubereitungsmaschine (2) nach Anspruch 2, **dadurch gekennzeichnet, dass** sich die Ausgangsöffnung (33) und das Rotationswerkzeug (13) im Wesentlichen in einer selben horizontalen Ebene P1 befinden, wenn sich die rotierende Rührvorrichtung (10) in der hohen Warteposition befindet.

4. Getränkezubereitungsmaschine (2) nach Anspruch 3, **dadurch gekennzeichnet, dass** die horizontale Ebene P1 und eine horizontale Ebene P2, die durch eine Oberseite (9) der Tassenauflage (4) verlaufen, um eine Höhe H beabstandet sind, wobei die Hohe H größer als 10 cm ist, vorzugsweise größer als 15 cm.

5. Getränkezubereitungsmaschine (2) nach einem der vorstehenden Ansprüche, **dadurch gekennzeichnet, dass** die Tassenauflage (4) in Bezug auf die Rahmenfügung (3) zwischen einer niedrigen Position zur Aufnahme von großen Behältern und einer hohen Position zur Aufnahme von kleinen Behältern höhenverstellbar ist.

6. Getränkezubereitungsmaschine (2) nach Anspruch 1, **dadurch gekennzeichnet, dass** die Düse (30) zum Ausschenken von Kaffee parallel zur Achse A zwischen einer angehobenen Position, in der die Ausgangsöffnung (33) dazu vorgesehen ist, mit einem großen Behälter zusammenzuwirken, und einer abgesenkten Position, in der die Ausgangsöffnung (33) dazu vorgesehen ist, mit einem kleinen Behälter zusammenzuwirken, vertikal verschiebbar ist.

7. Getränkezubereitungsmaschine (2) nach einem der vorstehenden Ansprüche, **dadurch gekennzeichnet, dass** sie eine Steuerschaltung (5) umfasst, die mit einem Steuerorgan (6) ausgestattet ist, das dazu ausgelegt ist, eine Zubereitung auf Milch- und Kaffeebasis ausgehend von einer einzigen Aktion, insbesondere einem einzigen Knopfdruck zu starten.

8. Getränkezubereitungsmaschine (2) nach einem der vorstehenden Ansprüche, **dadurch gekennzeichnet, dass** die rotierende Rührvorrichtung (10) einen Elektromotor (14) umfasst, der dazu vorgesehen ist, das Rotationswerkzeug (13) anzutreiben.

9. Getränkezubereitungsmaschine (2) nach einem der vorstehenden Ansprüche, **dadurch gekennzeichnet, dass** die Leitung (12) zum Zuführen von heißem Wasser und/oder Dampf einen rohrförmigen Abschnitt (25) umfasst, der sich entlang der Achse A zwischen einem ersten Ende (26), an dem das Werkzeug (13) angeordnet ist, und einem zweiten Ende (27), das auf einer Antriebswelle (15) angeordnet ist, erstreckt.

10. Getränkezubereitungsmaschine (2) nach Anspruch 9, **dadurch gekennzeichnet, dass** der rohrförmige Abschnitt (25) auf abnehmbare Weise auf der Antriebswelle (15) angeordnet ist.

11. Getränkezubereitungsmaschine (2) nach Anspruch 10, **dadurch gekennzeichnet, dass** die Antriebswelle (15) einen hohlen Abschnitt (16) zum Zuführen von heißem Wasser und/oder Dampf umfasst, auf dem der rohrförmige Abschnitt (25) angeordnet ist, und dass der hohle Abschnitt (16) eine Ausgangsöffnung (19) von heißem Wasser und/oder Dampf umfasst.

12. Getränkezubereitungsmaschine (2) nach Anspruch 11, **dadurch gekennzeichnet, dass** die rotierende Rührvorrichtung (10) einen Dampfkasten (20) umfasst, wobei der Dampfkasten (20) eine Kammer (23), einen radialen Kanal (24) zum Eintritt von Dampf und zwei dichte Stufen (21, 22) zum Führen der Antriebswelle (15) des Rotationswerkzeugs (13) umfasst, und dass der hohle Abschnitt (16) zum Zuführen von heißem Wasser und/oder Dampf die Kammer (23) mit dem rohrförmigen Abschnitt (25) verbindet.

13. Getränkezubereitungsmaschine (2) nach einem der vorstehenden Ansprüche, **dadurch gekennzeichnet, dass** die Düse (30) zum Ausschenken von Kaffee und das Rotationswerkzeug (13) nebeneinander in einer vertikalen Ebene parallel zur Vorderseite (11) der Rahmenfügung (3) angeordnet sind.

## Claims

1. Beverage preparation machine (2) comprising a frame (3) provided with a cup support (4), a coffee dispensing spout (30) comprising an outlet orifice (33) and a rotary stirring device (10) comprising a rotary tool (13) about an axis A and intended to engage with a preparation contained in a container resting on the cup support (4), said rotary stirring device (10) comprising a conduit (12) for conveying hot water and/or steam to the rotary tool (13), the rotary stirring tool (10) being mobile in vertical translation parallel to the axis A between a high pending position wherein the rotary tool (13) is located above the container and a low working position wherein the rotary tool (13) is located in the container, the outlet orifice (33) being disconnected from the rotary stirring device (10) and arranged at a distance D from the axis A of rotation of the rotary tool (13), **characterised in that** the distance D is constant and less than 6 cm, preferably less than 4 cm such that the outlet orifice (33) of the coffee dispensing spout (30) and the rotary tool (13) are arranged above an upper opening (40) of the container arranged on the cup support (4), **in that** the frame (3) comprising a front face (11) and **in that** the coffee dispensing spout (30) and the rotary tool (13) are arranged in front of the front face (11).

2. Beverage preparation machine (2) according to claim 1, **characterised in that** the outlet orifice of the coffee dispensing spout (30) is fixedly arranged with respect to the frame (3).

3. Beverage preparation machine (2) according to claim 2, **characterised in that** the outlet orifice (33) and the rotary tool (13) are substantially in one same horizontal plane P1 when the rotary stirring device (10) is in the high pending position.

4. Beverage preparation machine (2) according to claim 3, **characterised in that** the horizontal plane P1 and a horizontal plane P2 passing through an upper face (9) of the cup support (4) are distant by a height H, the height H being greater than 10 cm, preferably greater than 15 cm.

5. Beverage preparation machine (2) according to any one of the preceding claims, **characterised in that** the cup support (4) is height-adjustable with respect to the frame (3) between a low position for receiving large containers and a high position for receiving small containers.

6. Beverage preparation machine (2) according to claim 1, **characterised in that** the coffee dispensing spout (30) is mobile in vertical translation parallel to the axis A between a raised position wherein the outlet orifice (33) is intended to engage with a large container and a lowered position wherein the outlet orifice (33) is intended to engage with a small container.

7. Beverage preparation machine (2) according to any one of the preceding claims, **characterised in that** it comprises a control circuit (5) provided with a control member (6) designed to start a milk and coffee-based preparation from one single action, in particular, one single press.

8. Beverage preparation machine (2) according to any one of the preceding claims, **characterised in that** the rotary stirring device (10) comprises an electric motor (14) intended to drive the rotary tool (13).

9. Beverage preparation machine (2) according to any one of the preceding claims, **characterised in that** the conduit (12) for conveying hot water and/or steam comprises a tubular portion (25) which extends along the axis A between a first end (26) on which is arranged the rotary tool (13) and a second end (27) arranged on a drive shaft (15).

10. Beverage preparation machine (2) according to claim 9, **characterised in that** the tubular portion (25) is removably arranged on the drive shaft (15).

11. Beverage preparation machine (2) according to claim 10, **characterised in that** the drive shaft (15) comprises a hollow portion (16) for conveying hot water and/or steam on which is arranged the tubular portion (25) and **in that** the hollow portion (16) comprises an outlet orifice (19) for hot water and/or steam.

12. Beverage preparation machine (2) according to claim 11, **characterised in that** the rotary stirring device (10) comprises a steam box (20), said steam box (20) comprising a chamber (23), a radial steam inlet channel (24) and two sealed bearings (21, 22) for guiding the drive shaft (15) of the rotary tool (13), and **in that** the hollow portion (16) for conveying hot water and/or steam connects the chamber (23) to the tubular portion (25).

13. Beverage preparation machine (2) according to any one of the preceding claims, **characterised in that** the coffee dispensing spout (30) and the rotary tool (13) are arranged side-by-side in a vertical plane parallel to the front face (11) of the frame (3).
